# EUROPEAN PATENT APPLICATION

(11) **EP 3 633 326 A1**
(43) Date of publication of application: **08.04.2020**
(21) Application number: 18806199.8
(22) Date of filing: 10.05.2018
(51) Int. Cl.: G01F 3/22, G01F 1/66

(54) **FLOW RATE MEASUREMENT UNIT AND GAS METER USING SAME**

(30) Priority: 22.05.2017 JP 2017100532; 22.05.2017 JP 2017100533
(71) Applicant: Panasonic Intellectual Property Management Co., Ltd., Osaka-shi, Osaka 540-6207 (JP)
(72) Inventor: SUGIYAMA Masaki, Osaka 540-6207 (JP); KATASE Hiroaki, Osaka 540-6207 (JP); NAGANUMA Naoto, Osaka 540-6207 (JP)
(74) Representative: SSM Sandmair
(86) International application number: PCT/JP2018/018057
(87) International publication number: WO 2018/216481

(57) **Abstract**

Flow rate measurement unit (10) includes flow rate measurement section (11) having straight-tube-shaped measurement flow passage (12) provided with lead-in port (12a) and lead-out port (12b) for a fluid-to-be-measured, and shutoff valve (14) having valve seat (17) provided on lead-in port (12a) and valve body (15) that is in contact with valve seat (17). Using flow rate measurement unit (10) configured in this manner in a gas meter allows stable flow rate measurement regardless of a shape of the gas meter. Integrating flow rate measurement section (11) with shutoff valve (14) simplifies a structure of the gas meter and reduces a size of the gas meter.

## Description

### TECHNICAL FIELD

The present invention relates to a flow rate measurement unit that measures a flow rate of a fluid such as a gas, and to a gas meter having the flow rate measurement unit incorporated therein.

### BACKGROUND ART

A so-called electronic meter utilizing ultrasonic wave or a flow sensor has been put into practical use as a flowmeter such as a gas meter. As an application of such an electronic meter, a flow rate measurement unit capable of independently measuring a flow rate and a gas meter using the flow rate measurement unit have been proposed.

The gas meter has a built-in shutoff valve that exerts a security function of cutting off a gas when a monitored flow rate of the gas is found to be problematic.

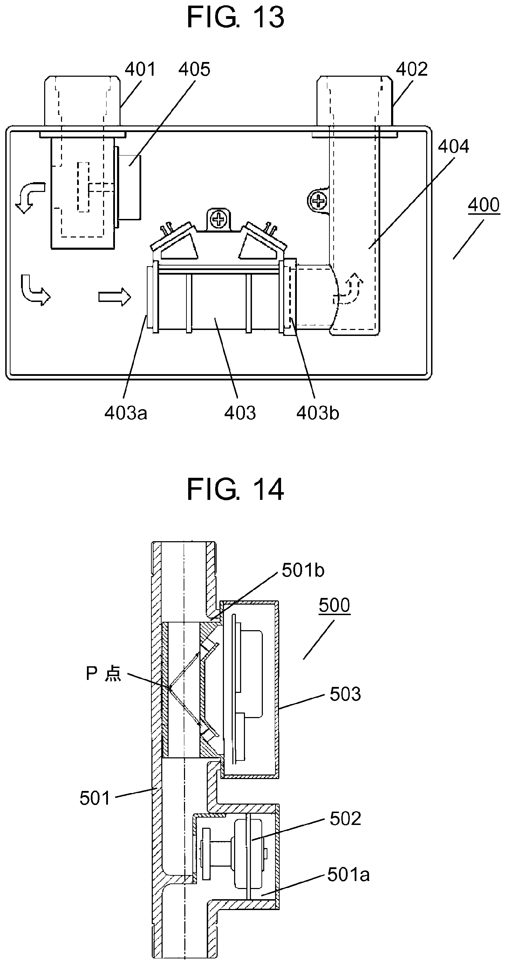

FIG. 13 depicts such a gas meter, showing flow rate measurement unit 403 housed in gas meter 400 having inlet 401 and outlet 402. Shutoff valve 405 is connected to inlet 401. A gas having flown into inlet 401 flows through a passage inside shutoff valve 405 and spreads in a body of gas meter 400. The gas, i.e., a fluid-to-be-measured spreading in the body of gas meter 400 flows into lead-in port 403a of flow rate measurement unit 403 and then flows out of lead-out port 403b connected to outlet pipe 404 (see, for example, PTL 1).

As a gas meter of a different form, gas meter 500 shown in FIG. 14 has also been proposed. Gas meter 500 has a configuration in which shutoff valve 502 and flow rate measurement unit 503 are fitted externally to a middle part of pipe 501 having a straight pipe shape (see, for example, PTL 2).

### Citation List

### Patent Literature

PTL 1: Unexamined Japanese Patent Publication No. 2012-18031
PTL 2: Unexamined Japanese Patent Publication No. 2012-247299

### SUMMARY OF THE INVENTION

However, in the case of the gas meter described in PLT 1, because flow rate measurement unit 403 is separated from shutoff valve 405, the gas having spread in gas meter 400 through shutoff valve 405 flows into flow rate measurement unit 403 from various directions. An inflow of the gas to flow rate measurement unit 403 is thus affected by a shape and size of the interior of gas meter 400, which makes it difficult to keep the inflow of the gas to flow rate measurement unit 403 constant. This has led to a need of individually optimizing a shape of flow rate measurement unit 403, a flow coefficient, or the like depending on a shape of the body of the gas meter.

In the case of the gas meter described in PLT 2, pipe 501 has opening 501a for fitting flow rate measurement unit 503 therein and opening 501b for fitting shutoff valve 502 therein, openings 501a and 501b being formed separately. This configuration poses a problem that downsizing of the gas meter is difficult. The configuration poses another problem that a sealing structure becomes complicated because of a need of making each of openings 501a, 501b airtight to prevent a gas leakage.

The present invention provides a flow rate measurement unit that has a cutoff function, and that allows stable flow rate measurement regardless of a shape of a gas meter in which the flow rate measurement unit is incorporated and allows downsizing of the gas meter.

A flow rate measurement unit according to the present invention includes a flow rate measurement section having a straight-tube-shaped measurement flow passage provided with a lead-in port and a lead-out port for a fluid-to-be-measured, and a shutoff valve having a valve seat provided on the lead-in port and a valve body that is in contact with the valve seat.

With this configuration, a gas flows constantly from the shutoff valve to the measurement flow passage. As a result, stable flow rate measurement can be performed regardless of a shape of a gas meter. In addition, through integration of the flow rate measurement section and the shutoff valve, the gas meter can be downsized.

A flow rate measurement unit according to the present invention includes a flow rate measurement section having a straight-tube-shaped measurement flow passage provided with a lead-in port and a lead-out port for a fluid-to-be-measured, and a shutoff valve provided on the lead-in port.

With this configuration, a gas flows constantly through the shutoff valve. As a result, stable flow rate measurement can be performed regardless of a shape of a gas meter. In addition, through integration of the flow rate measurement section and the shutoff valve, the gas meter can be downsized.

### BRIEF DESCRIPTION OF DRAWINGS

FIG. 1 is a side view of a flow rate measurement unit according to a first exemplary embodiment of the present invention.
FIG. 2 is a sectional view of the flow rate measurement unit according to the first exemplary embodiment of the present invention.
FIG. 3 is a sectional view of a gas meter using the flow rate measurement unit according to the first exemplary embodiment of the present invention.
FIG. 4 is a sectional view of another gas meter using the flow rate measurement unit according to the first exemplary embodiment of the present invention.
FIG. 5 is a sectional view of still another gas meter using the flow rate measurement unit according to the first exemplary embodiment of the present invention.
FIG. 6 is a sectional view of a principle part of the gas meter of FIG. 5.
FIG. 7 is a side view of a flow rate measurement unit according to a second exemplary embodiment of the present invention.
FIG. 8 is a sectional view of the flow rate measurement unit according to the second exemplary embodiment of the present invention.
FIG. 9 is a sectional view of a gas meter using the flow rate measurement unit according to the second exemplary embodiment of the present invention.
FIG. 10 is a sectional view of another gas meter using the flow rate measurement unit according to the second exemplary embodiment of the present invention.
FIG. 11 is a sectional view of still another gas meter using the flow rate measurement unit according to the second exemplary embodiment of the present invention.
FIG. 12 is a sectional view of a principle part of the gas meter of FIG. 11.
FIG. 13 is a sectional view of a gas meter using a conventional flow rate measurement unit.
FIG. 14 is a sectional view of a gas meter using another conventional flow rate measurement unit.

### DESCRIPTION OF EMBODIMENTS

Hereinafter, a flow rate measurement unit according to exemplary embodiments of the present invention and a gas meter using the flow rate measurement unit will be described with reference to the accompanying drawings. The same constituent elements will be denoted by the same reference numerals. Constituent elements already described will not be described repeatedly. The present invention is not limited by the exemplary embodiments that will be described below.

In this description, a gas meter is connected to a pipe that delivers a fluid to measure a flow rate of the fluid flowing through the pipe. The gas meter has a flow rate measurement unit incorporated therein. This flow rate measurement unit measures the flow rate of the fluid. In other words, the flow rate measurement unit is a component of the gas meter. In the following description, a detailed configuration of the flow rate measurement unit will first be described, and the gas meter having the flow rate measurement unit incorporated therein will then be described.

### (First exemplary embodiment)

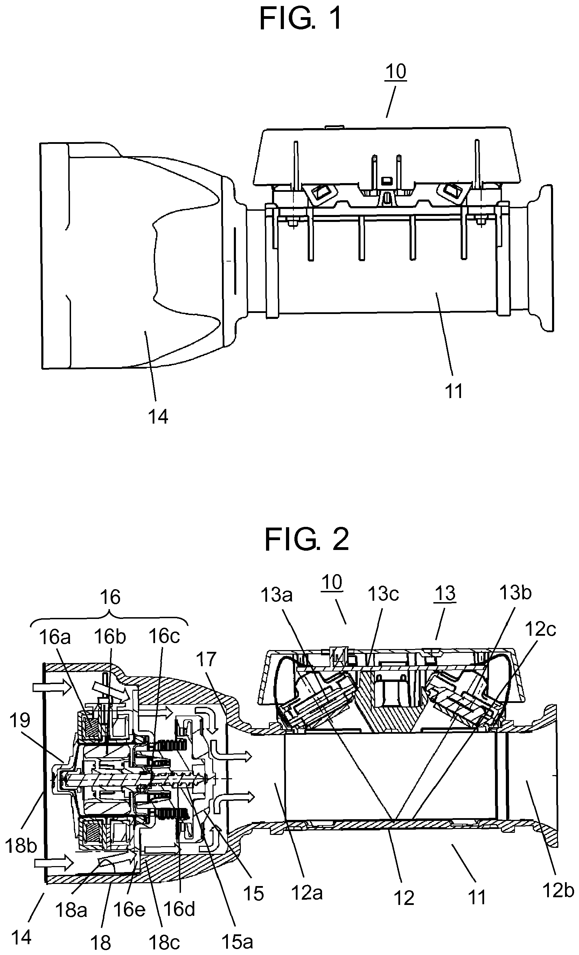

FIG. 1 is an external side view of a flow rate measurement unit according to a first exemplary embodiment. FIG. 2 is a sectional view of the flow rate measurement unit according to the first exemplary embodiment.

Flow rate measurement section 11 configuring flow rate measurement unit 10 includes measurement flow passage 12 provided with lead-in port 12a and lead-out port 12b for a gas, i.e., fluid-to-be-measured, and flow rate measurement block 13 that measures a flow rate of the gas flowing through measurement flow passage 12.

At flow rate measurement section 11, a measurement method utilizing ultrasonic wave is used. Specifically, a pair of ultrasonic transceivers 13a, 13b disposed in flow rate measurement block 13 are used. For example, an ultrasonic wave transmitted from ultrasonic transceiver 13a into measurement flow passage 12 propagates through a gas, is reflected by inner wall 12c of measurement flow passage 12, inner wall 12c being counter to ultrasonic transceiver 13a, and further propagates through the gas to reach ultrasonic transceiver 13b. A time that the ultrasonic wave takes to travel from ultrasonic transceiver 13a to ultrasonic transceiver 13b in this manner is measured. Based on this measured time, a flow velocity of the gas is determined, and, finally, a flow rate of the gas is determined.

On the upstream side of measurement flow passage 12, shutoff valve 14 is disposed. Shutoff valve 14 is composed of valve body 15, driver 19 that drives valve body 15, valve seat 17 formed on lead-in port 12a, and cylinder 18 that holds driver 19. Driver 19 causes valve body 15 to move and come in contact with valve seat 17. This action cuts off the gas.

Driver 19 is composed of motor 16 having stator 16a, rotor 16b, and rotating shaft 16c, and a linear motion mechanism which screws male screw 16d formed on a front end of rotating shaft 16c into female screw 15a of valve body 15, thereby transforms rotation of rotating shaft 16c into a linear motion. Driver 19 thus causes valve body 15 to move.

Cylinder 18 may be molded integrally with measurement flow passage 12 out of a resin, or may be separately molded out of a resin and bonded to measurement flow passage 12. Between inner wall 18a of cylinder 18 and an outer periphery of driver 19, passages through which the gas flows are formed as gaps. The gas thus takes paths indicated by white arrows to flow into measurement flow passage 12. On a gas inlet of cylinder 18, opening 18b is formed. Driver 19 is inserted through this opening 18b into cylinder 18, in which flange 16e of driver 19 is fixed to fixing portion 18c of cylinder 18, using screws or the like (not depicted).

As described above, flow rate measurement unit 10 according to this exemplary embodiment has a cutoff function. Merely incorporating flow rate measurement unit 10 into a gas meter, therefore, allows the gas meter to achieve both fluid measurement function and cutoff function. Valve body 15 is located near the upstream side of lead-in port 12a of measurement flow passage 12. In that location, valve body 15 exerts a rectifying effect, causing the gas to flow uniformly into measurement flow passage 12. As a result, stable flow rate measurement can be performed.

Even if a flow state of the gas flowing into flow rate measurement unit 10 varies depending on a variation in a size and shape of an internal space of the meter, the rectifying effect by valve body 15 reduces the influence of flow state variations on flow rate measurement. One flow rate measurement unit 10, therefore, can be applied to gas meters of various shapes.

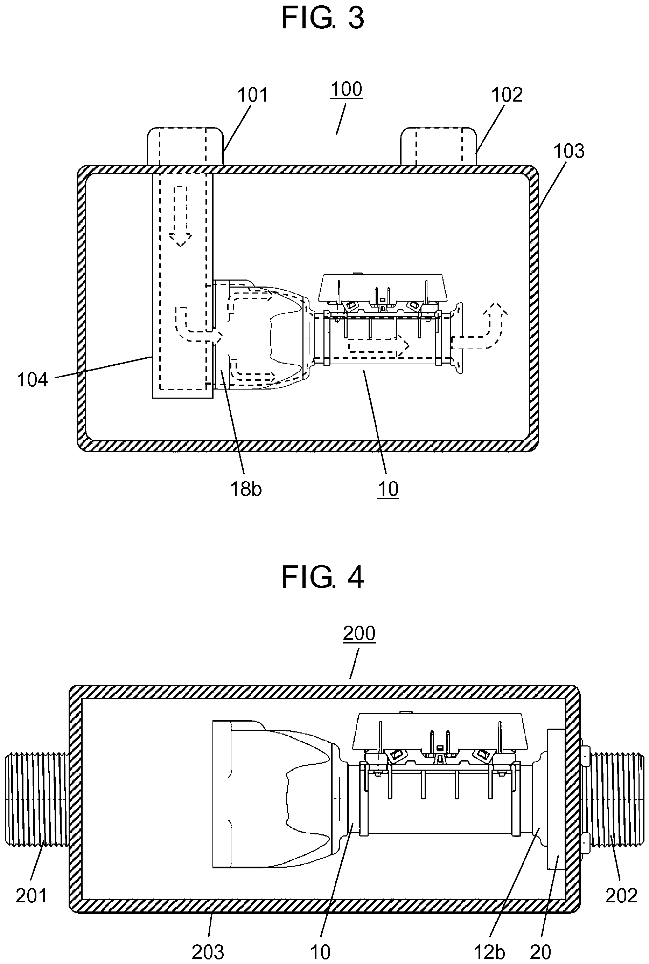

FIG. 3 is a sectional view of gas meter 100 in which flow rate measurement unit 10 is incorporated. Inside gas meter body 103 having meter inlet 101 and meter outlet 102, flow rate measurement unit 10 is placed such that opening 18b is connected to coupler 104 coupled to meter inlet 101. In this configuration, the gas, i.e., fluid-to-be-measured flows into meter inlet 101, travels through coupler 104, and flows through flow rate measurement unit 10 to come out of meter outlet 102, as indicated by white arrows drawn by broken lines.

As described above, by incorporating flow rate measurement unit 10 of this exemplary embodiment into the gas meter, a gas meter with a cutoff function can be achieved easily.

FIG. 4 depicts gas meter 200 according to another exemplary embodiment, gas meter 200 having flow rate measurement unit 10 of the first exemplary embodiment incorporated therein. As shown in FIG. 4, inside gas meter body 203 having meter inlet 201 and meter outlet 202 that are arranged linearly, flow rate measurement unit 10 is placed such that lead-out port 12b of flow rate measurement unit 10 is directly connected airtightly to meter outlet 202 via fitting member 20.

According to gas meter 200 configured in the above manner, compared in configuration to gas meter 100 shown in FIG. 3, the gas meter body can be further downsized. In addition, the gas meter can be attached to a middle part of a straight pipe. This improves a degree of freedom in installing the gas meter.

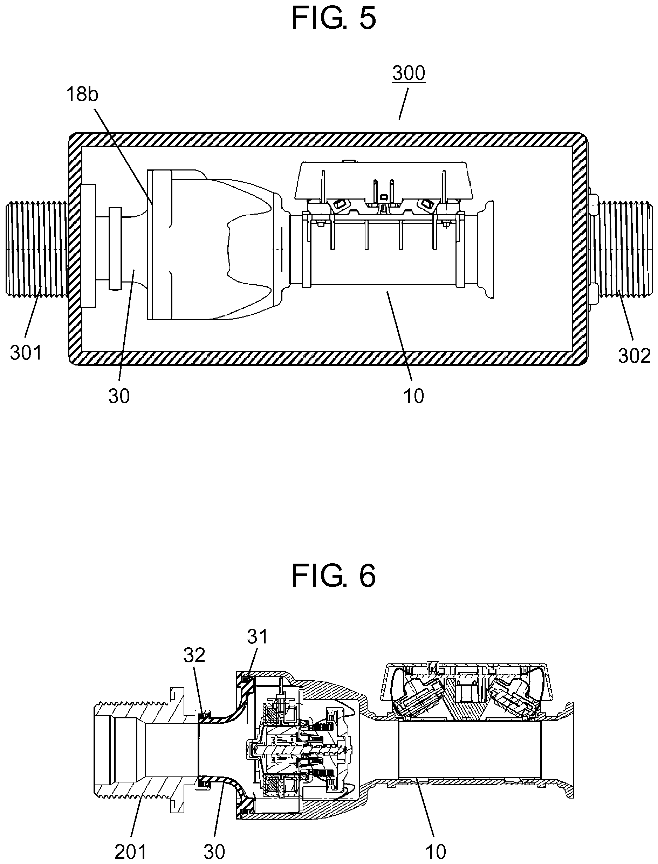

FIG. 5 depicts gas meter 300 according to still another exemplary embodiment, gas meter 300 having flow rate measurement unit 10 of the first exemplary embodiment incorporated therein. As shown in FIG. 5, coupler 30 coupled to meter inlet 301 is connected to opening 18b of flow rate measurement unit 10. On a face of gas meter 300 that is opposite to a face on which meter inlet 301 is formed, meter outlet 302 is formed. FIG. 6 is a sectional view of a principle part of gas meter 300 of FIG. 5, showing a configuration in which coupler 30 and meter inlet 301 are joined to flow rate measurement unit 10. As shown in FIG. 6, flow rate measurement unit 10 is connected airtightly to coupler 30, using O-ring 31, and coupler 30 is connected airtightly to meter inlet 301, using O-ring 32.

According to gas meter 300 configured in the above manner, compared in configuration to gas meter 100 shown in FIG. 3, the gas meter body can be further downsized. In addition, the gas meter can be attached to a middle part of a straight pipe. This improves a degree of freedom in installing the gas meter.

### (Second exemplary embodiment)

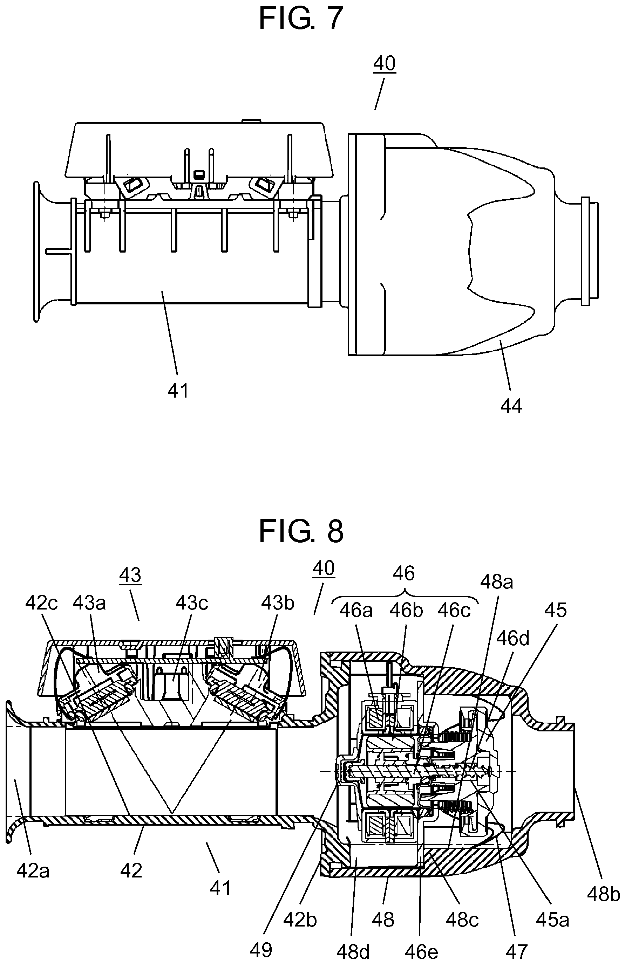

FIG. 7 is an external side view of flow rate measurement unit 40 according to a second exemplary embodiment. FIG. 8 is a sectional view of the flow rate measurement unit according to the second exemplary embodiment.

Flow rate measurement section 41 configuring flow rate measurement unit 40 is composed of measurement flow passage 42 provided with lead-in port 42a and lead-out port 42b for a gas, i.e., fluid-to-be-measured, and flow rate measurement block 43 that measures a flow rate of the gas flowing through the measurement flow passage 42.

At flow rate measurement section 41, a measurement method utilizing ultrasonic wave is used. Specifically, a pair of ultrasonic transceivers 43a, 43b disposed in flow rate measurement block 43 are used. For example, an ultrasonic wave transmitted from ultrasonic transceiver 43a into measurement flow passage 42 propagates through a gas, is reflected by an inner wall 42c of measurement flow passage 42, inner wall 42c being counter to ultrasonic transceiver 43a, and further propagates through the gas to reach ultrasonic transceiver 43b. A time that the ultrasonic wave takes to travel from ultrasonic transceiver 43a to ultrasonic transceiver 43b in this manner is measured. Based on this measured time, a flow velocity of the gas is determined, and, finally, a flow rate of the gas is determined.

On the downstream side of measurement flow passage 42, shutoff valve 44 is disposed. Shutoff valve 44 is composed of cylinder 48 connected to lead-out port 42b, valve body 45, driver 49 that drives valve body 45, and valve seat 47 formed on opening 48b. Driver 49 causes valve body 45 to move and come in contact with valve seat 47. This action cuts off the gas.

Driver 49 is composed of motor 46 having stator 46a, rotor 46b, and rotating shaft 46c, and a linear motion mechanism which screws male screw 46d formed on a front end of rotating shaft 46c into female screw 45a of valve body 45, thereby transforms rotation of rotating shaft 46c into a linear motion. Driver 49 thus causes valve body 45 to move.

On a gas inlet of cylinder 48, opening 48d is formed. Driver 49 is inserted through this opening 48d into cylinder 48, in which a flange 46e of driver 49 is fixed to fixing portion 48c of cylinder 48, using screws or the like (not depicted).

Cylinder 48 is connected airtightly to flow rate measurement section 41 via lead-out port 42b, which matches opening 48d in shape, and a sealing member, such as an O-ring (not depicted). Between inner wall 48a of cylinder 48 and an outer periphery of driver 49, passages through which the gas flows are formed as gaps. The gas having traveled through measurement flow passage 42, therefore, further flows through these gaps to come out of opening 48b.

As described above, flow rate measurement unit 40 according to this embodiment has a cutoff function. Merely incorporating flow rate measurement unit 40 into a gas meter, therefore, allows the gas meter to achieve both fluid measurement function and cutoff function.

Even if a flow state of the gas flowing into flow rate measurement unit 40 varies depending on a variation in a size and shape of an internal space of the meter, a rectifying effect by valve body 45 reduces the influence of flow state variations on flow rate measurement. One flow rate measurement unit 40, therefore, can be applied to gas meters of various shapes.

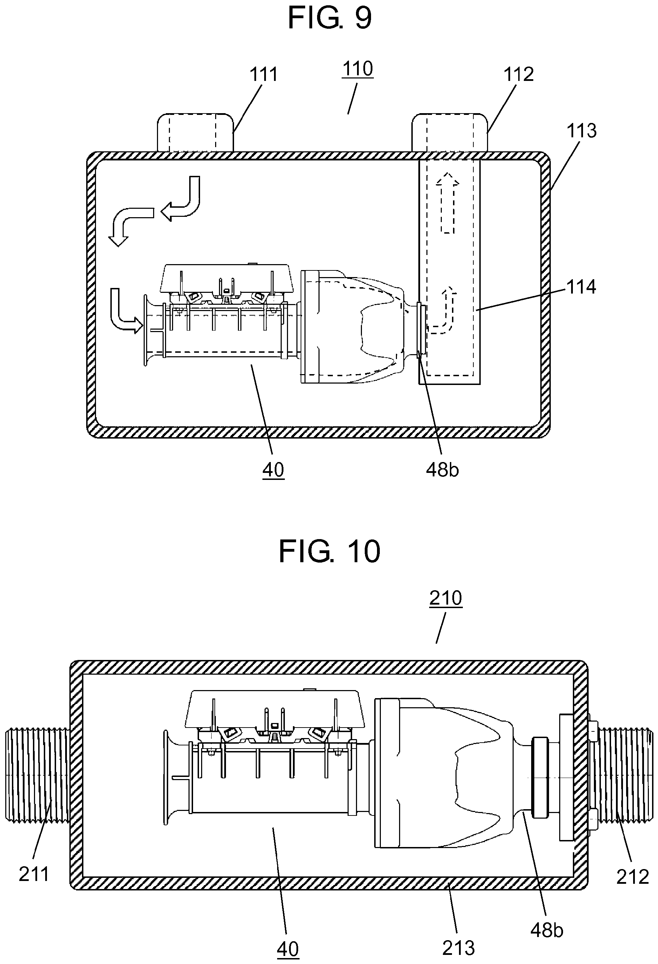

FIG. 9 is a sectional view of gas meter 110 in which flow rate measurement unit 40 is incorporated. Inside gas meter body 113 having meter inlet 111 and meter outlet 112, flow rate measurement unit 40 is placed such that opening 48b is connected to coupler 114 coupled to meter outlet 112. In this configuration, the gas, i.e., fluid-to-be-measured flows into meter inlet 111, travels through flow rate measurement unit 40, and further flows through coupler 114 to come out of meter outlet 112, as indicated by white arrows drawn by continuous lines and broken lines.

As described above, by incorporating flow rate measurement unit 40 of this exemplary embodiment into the gas meter, a gas meter with a cutoff function can be achieved easily.

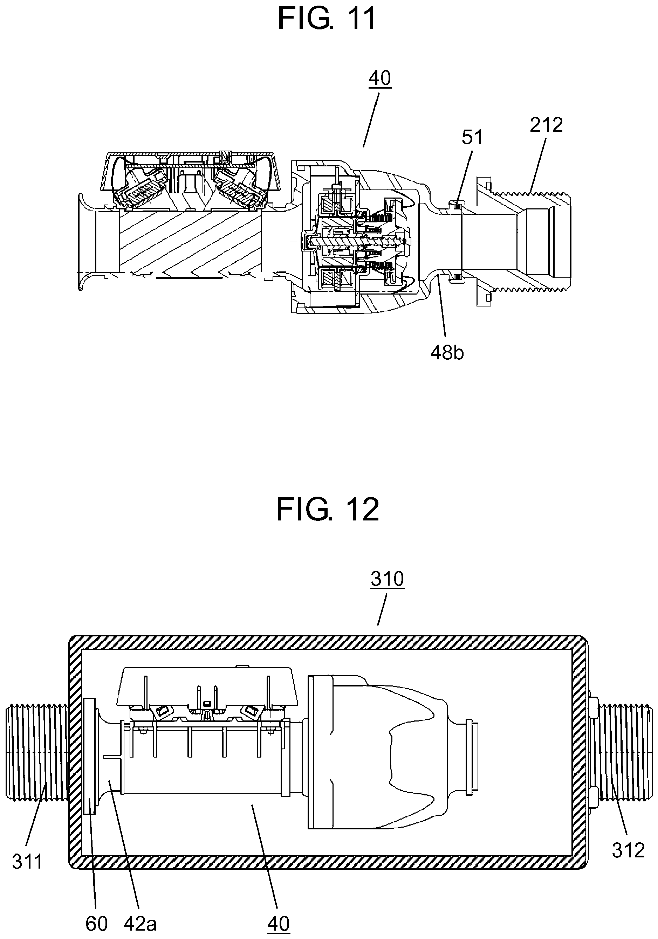

FIG. 10 depicts gas meter 210 according to another exemplary embodiment, gas meter 210 having flow rate measurement unit 40 of the second exemplary embodiment incorporated therein. As shown in FIG. 10, inside gas meter body 213 having meter inlet 211 and meter outlet 212 that are arranged linearly, flow rate measurement unit 40 is placed such that opening 48b of flow rate measurement unit 40 is directly connected airtightly to meter outlet 212. FIG. 11 is a sectional view of a principle part of gas meter 210 of FIG. 10, showing a configuration in which meter outlet 212 is joined to flow rate measurement unit 40. As shown in FIG. 11, flow rate measurement unit 40 is connected airtightly to meter outlet 212, using O-ring 51.

According to gas meter 210 configured in the above manner, compared in configuration to gas meter 110 shown in FIG. 9, the gas meter body can be further downsized. In addition, the gas meter can be attached to a middle part of a straight pipe. This improves a degree of freedom in installing the gas meter.

FIG. 12 depicts gas meter 310 according to still another exemplary embodiment, gas meter 310 having flow rate measurement unit 40 of the second exemplary embodiment incorporated therein. In FIG. 12, lead-in port 42a of flow rate measurement unit 40 is connected to meter inlet 311 via coupler 60. On a face of gas meter 310 that is opposite to a face on which meter inlet 311 is formed, meter outlet 312 is formed.

According to gas meter 310 configured in the above manner, compared in configuration to gas meter 110 shown in FIG. 9, directly connecting flow rate measurement unit 40 of the second exemplary embodiment to meter inlet 311 allows further downsizing of the gas meter body. In addition, the gas meter can be attached to a middle part of a straight pipe. This improves a degree of freedom in installing the gas meter.

As described above, a flow rate measurement unit according to a first aspect of the present disclosure includes a flow rate measurement section having a straight-tube-shaped measurement flow passage provided with a lead-in port and a lead-out port for a fluid-to-be-measured, and a shutoff valve having a valve seat provided on the lead-in port and a valve body that is in contact with the valve seat.

With this configuration, stable flow rate measurement can be performed regardless of a shape of a gas meter. In addition, through integration of a flow rate measurement function of the flow rate measurement section and a cutoff function of the shutoff valve, the gas meter can be downsized.

The flow rate measurement unit according to a second aspect of the present disclosure is the flow rate measurement unit according to the first aspect of the present disclosure configured such that the shutoff valve may include a cylinder extending from the lead-in port and having an opening, and a driver that drives the valve body fixed inside the cylinder.

The flow rate measurement unit according to a third aspect of the present disclosure is the flow rate measurement unit according to the second aspect of the present disclosure configured such that the driver may move the valve body by a motor and a linear motion mechanism which transforms rotation of the motor into a linear motion, and that the opening, a rotating shaft of the motor, the lead-in port, and the lead-out port may be disposed substantially linearly.

A gas meter according to a fourth aspect of the present disclosure includes a body having a meter inlet and a meter outlet for a fluid-to-be-measured, and the flow rate measurement unit according to any one of the first to third aspects of the present disclosure, in which the lead-out port may be airtightly connected to the meter outlet.

A gas meter according to a fifth aspect of the present disclosure includes a body having a meter inlet and a meter outlet for a fluid-to-be-measured, the meter inlet and the meter outlet being disposed substantially linearly, and the flow rate measurement unit according to any one of the first to third aspects of the present disclosure, in which the lead-out port may be airtightly connected to the meter outlet.

A gas meter according to a sixth aspect of the present disclosure includes a body having a meter inlet and a meter outlet for a fluid-to-be-measured, the meter inlet and the meter outlet being disposed linearly, and the flow rate measurement unit according to any one of the first to third aspects of the present disclosure, in which the opening may be airtightly connected to the meter inlet.

A flow rate measurement unit according to a seventh aspect of the present disclosure includes a flow rate measurement section having a straight-tube-shaped measurement flow passage provided with a lead-in port and a lead-out port for a fluid-to-be-measured, and a shutoff valve provided on the lead-out port.

With this configuration, a flow rate measurement function of the flow rate measurement section and a cutoff function of the shutoff valve are integrated together. As a result, the gas meter can be downsized.

The flow rate measurement unit according to an eighth aspect of the present disclosure is the flow rate measurement unit according to the seventh aspect of the present disclosure configured such that the shutoff valve may include a cylinder having one end connected to the lead-out port and the other end having an outlet, a valve seat disposed on the outlet of the cylinder, a valve body that is in contact with the valve seat, and a driver that drives the valve body fixed inside the cylinder.

The flow rate measurement unit according to a ninth aspect of the present disclosure is the flow rate measurement unit according to the eighth aspect of the present disclosure configured such that the driver may move the valve body by a motor and a linear motion mechanism that transforms rotation of the motor into a linear motion, and that the outlet, a rotating shaft of the motor, the lead-in port, and the lead-out port may be disposed substantially linearly.

A gas meter according to a tenth aspect of the present disclosure includes a body having a meter inlet and a meter outlet for a fluid-to-be-measured, and the flow rate measurement unit according to any one of the seventh to ninth aspects of the present disclosure, in which the outlet may be airtightly connected to the meter outlet.

A gas meter according to an eleventh aspect of the present disclosure includes a body having a meter inlet and a meter outlet for a fluid-to-be-measured, the meter inlet and the meter outlet being disposed substantially linearly, and the flow rate measurement unit according to any one of the seventh to ninth aspects of the present disclosure, in which the outlet may be airtightly connected to the meter outlet.

A gas meter according to a twelfth aspect of the present disclosure includes a body having a meter inlet and a meter outlet for a fluid-to-be-measured, the meter inlet and the meter outlet being disposed substantially linearly, and the flow rate measurement unit according to any one of the seventh to ninth aspects of the present disclosure, in which the lead-in port may be airtightly connected to the meter inlet.

### INDUSTRIAL APPLICABILITY

A measurement unit according to the present invention includes a built-in shutoff valve. This allows downsizing of a gas meter having a cutoff function.

### REFERENCE MARKS IN THE DRAWINGS

10, 40: flow rate measurement unit
11, 41: flow rate measurement section
12, 42: measurement flow passage
12a, 42a: lead-in port
12b, 42b: lead-out port
14, 44: shutoff valve
15, 45: valve body
16, 46: motor
17, 47: valve seat
18, 48: cylinder
18b, 48d: opening
19, 49: driver
48b: outlet
100, 110, 200, 210, 300, 310: gas meter
101, 111, 201, 211, 301, 311: meter inlet
102, 112, 202, 212, 302, 312: meter outlet

## Claims

1. A flow rate measurement unit comprising:
a flow rate measurement section having a straight-tube-shaped measurement flow passage provided with a lead-in port and a lead-out port for a fluid-to-be-measured; and
a shutoff valve having a valve seat provided on the lead-in port and a valve body that is in contact with the valve seat.

2. The flow rate measurement unit according to claim 1, wherein the shutoff valve includes a cylinder extending from the lead-in port and having an opening, and a driver that drives the valve body fixed inside the cylinder.

3. The flow rate measurement unit according to claim 2, wherein
the driver moves the valve body by a motor and a linear motion mechanism that transforms rotation of the motor into a linear motion, and
the opening, a rotating shaft of the motor, the lead-in port, and the lead-out port are disposed substantially linearly.

4. A gas meter comprising:
a body having a meter inlet and a meter outlet for a fluid-to-be-measured; and
the flow rate measurement unit according to any one of claims 1 to 3, wherein
the lead-out port is airtightly connected to the meter outlet.

5. A gas meter comprising:
a body having a meter inlet and a meter outlet for a fluid-to-be-measured, the meter inlet and the meter outlet being disposed substantially linearly; and
the flow rate measurement unit according to any one of claims 1 to 3, wherein
the lead-out port is airtightly connected to the meter outlet.

6. A gas meter comprising:
a body having a meter inlet and a meter outlet for a fluid-to-be-measured, the meter inlet and the meter outlet being disposed substantially linearly; and
the flow rate measurement unit according to any one of claims 1 to 3, wherein
the opening is airtightly connected to the meter inlet.

7. A flow rate measurement unit comprising:
a flow rate measurement section having a straight-tube-shaped measurement flow passage provided with a lead-in port and a lead-out port for a fluid-to-be-measured; and
a shutoff valve provided on the lead-out port.

8. The flow rate measurement unit according to claim 7, wherein the shutoff valve include: a cylinder having one end connected to the lead-out port and another end having an outlet; a valve seat disposed on the outlet of the cylinder; a valve body that is in contact with the valve seat; and a driver that drives the valve body fixed inside the cylinder.

9. The flow rate measurement unit according to claim 8, wherein
the driver moves the valve body by a motor and a linear motion mechanism that transforms rotation of the motor into a linear motion, and
the outlet, a rotating shaft of the motor, the lead-in port, and the lead-out port are disposed substantially linearly.

10. A gas meter comprising:
a body having a meter inlet and a meter outlet for a fluid-to-be-measured; and
the flow rate measurement unit according to any one of claims 7 to 9, wherein
the outlet is airtightly connected to the meter outlet.

11. A gas meter comprising:
a body having a meter inlet and a meter outlet for a fluid-to-be-measured, the meter inlet and the meter outlet being disposed substantially linearly; and
the flow rate measurement unit according to any one of claims 7 to 9, wherein
the outlet is airtightly connected to the meter outlet.

12. A gas meter comprising:
a body having a meter inlet and a meter outlet for a fluid-to-be-measured, the meter inlet and the meter outlet being disposed substantially linearly; and
the flow rate measurement unit according to any one of claims 7 to 9, wherein
the lead-in port is airtightly connected to the meter inlet.
